# EUROPEAN PATENT SPECIFICATION

(11) **EP 0 341 874 B1**
(45) Date of publication and mention of the grant of the patent: **15.06.1994**
(21) Application number: 89304320.8
(22) Date of filing: 28.04.1989
(51) Int. Cl.: B01D 39/20

(54) **Elastomeric filtration materials**
Elastisches Filtermaterial
Matériaux de filtration élastiques

(30) Priority: 13.05.1988 US 193809
(43) Date of publication of application: 15.11.1989
(73) Proprietor: MINNESOTA MINING AND MANUFACTURING COMPANY, Saint Paul, Minnesota 55133-3427 (US)
(72) Inventor: Braun, David L., St. Paul Minnesota 55144-1000 (US); Rekow, Peter O., St. Paul Minnesota 55144-1000 (US); Meyer, Daniel E., St. Paul Minnesota 55144-1000 (US)
(74) Representative: Baillie, Iain Cameron

(56) References cited:
- EP-A- 0 183 059
- EP-A- 0 246 811
- US-A- 4 354 901
- US-A- 4 620 932
- PATENT ABSTRACTS OF JAPAN, vol.10, no. 303 (C-378)(2359),16 October 1986; & JP-A-61118113 (JAPAN VILENE CO LTD) 05.06.1986

## Description

### Background of the Invention

### Field of the Invention

The present invention relates to nonwoven fibrous filter media which are particularly useful as prefilters on respirators.

### Background Information

There is increasing interest by governmental agencies, the general public, and the work force in protecting individuals against the harmful effects of toxic materials such as lead fumes, silica dust, asbestos, and paint spray. A variety of face masks, respirators, and filters have been proposed to filter such toxic materials from the air.

U.S. Patent No. 3,971,373 (Braun) discloses a particle-loaded small diameter fiber sheet product and respirators made therefrom. The sheet product comprises a uniform three-dimensional arrangement of discrete solid particles uniformly dispersed in a web of melt-blown small diameter fibers. The particles are physically held in the web, even though there is only point contact between the small diameter fibers and the particles, whereby the full surface of the particles is available for interaction with a medium to which the sheet product is exposed.

U.S. Patent No. 4,215,682 (Kubik et al.) discloses a fibrous web electret which comprises melt-blown fibers prepared by extruding molten fiber-forming material through orifices into a high-velocity gaseous stream where the extruded material is drawn out into fiber and solidified in the fibrous form, the fibers having electrically charged particles and a persistent electric charge that is useful to enhance filtering properties of the web, the charge having a half-life of at least one week in a room-temperature, 100-percent-relative-humidity environment.

U.S. Patent No. 4,294,599 (Grovesteen et al.) discloses an aerosol filter cartridge employing a prefilter having the form of a closely spiraled Fiberglas mat functioning to distribute captured aerosol particles substantially uniformly therethrough. The Fiberglas mat is placed edgewise against the final filtering components of the cartridge.

U.S. Patent No. 4,334,901 (Ayes et al.) discloses a respirator cartridge which is designed to eliminate the traditional screen between the perforated cartridge bottom and its adjacent filter component, substitute Fiberglas for one of the usual two wool-felt components and minimize filter component-to-shell cementing operations along with reshaping of the initial aerosol contacting filter component for effecting greater than usual distribution of aerosol loading and lower inhalation resistance.

U.S. Patent No. 4,600,002 (Maryyanek et al.) discloses a multiple ply, fold-flat, disposable respirator having, as one ply, a layer of a toxic gas or vapor absorbing material, and as another ply, an aerosol filter. The respirator has an inturned vertical seam covered with a strip of foamed elastomer.

U.S. Patent No. 4,662,005 (Grier-Idris) discloses a pouch-like conformable face mask which includes a generally rectangular body portion formed from a filtration medium and having top and bottom edge portions and a pair of opposed side portions. An elastically extendible material is located at the periphery of the side and bottom edge portions of the generally rectangular body portion,mask to gather into a pouch or cup-like configuration.

U.S. Patent No. Re. 32,171 discloses an electret fibrous web which is prepared by continuously feeding a film of highly molecular non-polar material; heating the film; stretching the film along the longitudinal axis thereof as defined by the path of movement of the film; homopolarly electrically charging at lease one aide of the film; fibrillating the charged film into fober material; and collecting the fiber material.

Ogawa, in an article entitled "Development of Spunbonded Based on Thermoplastic Polyurethane," Nonwovens World, May-June, 1986. pp 79-81, describes a spunbonded nonwoven polyurethane elastic fabric developed by Kanebo Ltd. The fabric is made using a melt blown process which is different from a conventional melt blown process to produce fabric which is similar to that of spunbonded fabrics. The diameter of its filaments is not so fine as that of the usual melt blown fabrcs, i.e., 0.5-2 »m, but apparently is closer to that of the spunbonded fabrics, i.e., 20-50 »m. The elasticity, dust catching capability, low linting, high friction coefficient, air permeability and welding characteristics of the urethane fabrics are discussed in the article.

### Summary of the Invention

The present invention provides elastomeric nonwoven fibrous fluid filter media for removal of particulate contaminants from the fluid comprising thermoplastic elastomeric melt-blown small diameter fibers of specific diameter, the small diameter fibers being randomly arrayed, the filter media having a specific basis weight and having substantially uniform stretch properties in all directions, whose filtration properties are independent of filter media elongations sufficient to increase the filter media surface area at least 10 percent, preferably at least 25 percent, more preferably at least 40 percent. The elastomeric filter media of the present invention have utility as low pressure drop filter and prefilter materials or as tubular fluid filters. The filter media may further comprise a variety of mixtures of fibers and/or particulate material such as, for example, absorbent particulate, staple fibers, or electrically charged fibrils.

The present invention further provides a respirator having as a low pressure drop prefilter thereon for removal of particulate fluid contaminants elastomeric nonwoven fibrous fluid filter media comprising thermoplastic elastomeric melt-blown small diameter fibers of specific diameter, the small diameter fibers being randomly arrayed, the filter media having a specific basis weight and having substantially uniform stretch properties in all directions, whose filtration properties are independent of filter media elongations sufficient to increase the filter media surface area at least 10 percent.

Surprisingly, the filtration performance of the filter media of the present invention remains substantially constant when the media is subjected to mechanical stresses which increased their area. This is particularly surprising in that the filter media becomes thinner when stretched and the geometry of the open area of the media is significantly altered as the filter media is stretched. The comparatively constant filtration performance might be expected with minor extensions which produce increases of 3 or 4 percent in the total area of the filter, but such comparatively constant filtration performance is totally unexpected with extensions that produced increases in excess of 40 percent in the area of the filter.

Filtration performance which is substantially independent of the degree of elongation of the filter media coupled with a low pressure drop on loading enables the elastomeric filter media of the present invention to function very effectively as prefilter materials. In addition to their highly desirable filtration properties, the inherent elasticity and conformability of the filter media and the ability to seal against a range of complex filter holders without elaborate adapters makes the elastomeric filter media of the present invention a very versatile and economic prefilter material.

The filter media of the present invention are elastic, and hence are not subject to catastrophic failure on experiencing comparatively small mechanical stresses, i.e., 5 percent or less increase in area, as are nonwoven filter media prepared from polypropylene and polycarbonate materials. Also, because of their elastic properties and associated toughness as compared to the inelastic polypropylene and polycarbonate media, they require little, if any, additional support or protection, such as, for example, as occur in laminated structures. The elastic properties of the filter media also enable the filter media to seal against a filtration fixture simply by stretching the filter media over a smooth edge of the filtration fixture.

### Description of the Drawings

FIG. 1 is a single-piece prefilter element based on the elastomeric filter media of the present invention.

FIG. 2 is a cross-sectional view of the prefilter element of FIG. 1 taken along line 1-1 of FIG. 1.

FIG. 3 is the prefilter illustrated in Figure 1 installed on a respirator.

FIG. 4 tubular elastic filter mounted on a filter tube.

### Detailed Description of the Invention

The nonwoven elastomeric filter media of the present invention are based on melt blown webs of thermoplastic elastomeric small diameter fibers. Elastomeric thermoplastic materials from which the small diameter fiber webs can be prepared include, for example, elastomeric polyurethanes, elastomeric polyesters, elastomeric polyamides and elastomeric A-B-A′ block copolymers wherein A and A′ are styrenic moieties and B is an elastomeric midblock.

Filtration properties of the elastomeric filter media of the present invention can be tailored over a wide range through selection of the appropriate melt blown fiber size or by uniform incorporation of crimped spacing staple fibers, or electrically charged or chargeable fibers or fibrous clusters into the web matrix. Sorbent particulate material may also be incorporated in the web.

Crimped spacing staple fibers are preferably included in the filter media to reduce the pressure drop during use and to decrease caking of the filter media by the material being filtered as well as to provide filtration. Useful crimped spacing fibers include, for example, acrylic, polyester, nylon and polyolefin fibers. Polyester and acrylic fibers are particularly preferred. The crimped spacing fibers are preferably incorporated at loading levels of from 10 to 60 weight percent, more preferably 25 to 35 weight percent of the filter media. The crimped spacing fibers preferably are 1.5 to 15 , more preferably 4 to 6, denier in size and have an average staple length sufficient to include at least one complete crimp, more preferably at least three or four crimps. Generally the crimped spacing fibers should average 2 to 15 centimeters in length. Preferably the crimped spacing fibers are less than 5 centimeters in length.

The ability of the elastomeric filter media to remove small particulate matter from an air stream can be dramatically improved by incorporating into the filter media charged fibers, i.e., fibrillated polypropylene fibers such as those described in U.S. Patent No. 4,588,537 (Klasse et al.). Such charged fibers also can serve as spacing fibers to reduce pressure drops during particulate filtration. Preferably the amount of charged fibers incorporated in the filter media is in the range of 10 to 60 weight percent, more preferably in the range of 25 to 35 weight percent.

Elastic properties of the filter media are controlled by the size of the fiber making up the filter media, the amounts of various types of fibers in the filter media and the basis weight of the web. The elastomeric small diameter fibers have diameters of from 1 »m to 50 »m, more preferably from 5 »m to 30 »m. When the diameter of the small diameter fibers is less than 1 »m, the web may lack sufficient tensile strength. When the diameter of the small diameter fibers is greater than 50 »m, filtration properties may be reduced.

The basis weight of the web is also a major factor in controlling the elastic properties of the filter media. Higher basis weight webs are typically used for applications requiring higher tensions or higher filtration properties while lower basis weight webs are utilized for applications requiring low tensions. Web basis weights are in the range of from 15 to about 300 grams/m², preferably in the range of from 100 to 200 gm/m². As was the case with the fiber diameter, the specific application will determine the optimum web basis weight.

The filter media of the invention preferably has a tensile strength of at least 0.5 g/2.5 cm width/g/m² basis weight, more preferably at least 2 g/2.5 cm width/g/m² basis weight. When the tensile strength is less than 0.1 g/2.5 cm width/g/m² basis weight, the filter media may tear during attachment to a fixture or respirator.

The filter media of the invention preferably has an elongation at break of at least 50%, more preferably at least 100%. When the elongation at break is less than 20%, the filter media may rupture during use, e.g., when being stretched over a respirator as a prefilter.

The filter media of the present invention can be prepared by a process similar to that taught in Wente, Van A., "Superfine Thermoplastic Fibers" in Industrial Engineering Chemistry, Vol. 48, pages 1342 et seq (1956), or in Report No. 4364 of the Naval Research Laboratories, published May 25, 1954 entitled "Manufacture of Superfine Organic Fibers" by Wente, Van A., Boone, C.D. and Fluharty, E.L. except that a circular orifice die is preferably used. The thermoplastic elastomeric materials are extruded through the die into a high velocity stream of heated air which draws out and attenuates the fibers prior to their solidification and collection.

Loading of the elastomeric melt blown webs with crimped spacing staple fibers or fibrous clusters can be achieved by gently introducing a secondary air stream containing the staple fibers or fibrous clusters into the primary air stream carrying the extruded fibers in a manner similar to that described in U.S. Patent No. 4,118,531 (Hauser), at a point where the fibers are still in a tacky condition. The secondary air stream, which typically has a velocity of from 10 to 50 m/sec, intersects the primary air stream, which typically has a velocity of from 100 to 180 m/sec, in a substantially perpendicular manner.

The thus-loaded fiber stream can then be collected in a random fashion such as, for example, on a perforated screen cylinder, prior to complete fiber solidification so that the fibers can form a coherent web which does not require additional binders. It is suspected that some adhesive bonding between fibers at points of contact may occur between fibers when they contact each other prior to complete solidification.

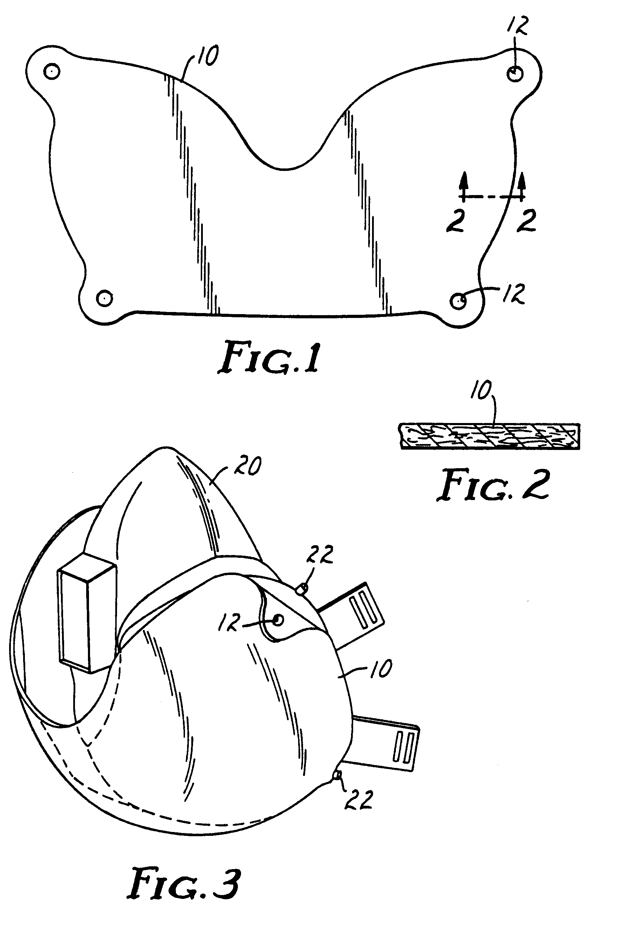

The filter media of the invention is particularly useful as a prefilter for respirators. FIG. 1 is an illustration of a single piece prefilter element 10 utilizing the elastomeric filter media of the present invention. The element 10, which is slightly undersized for the filter area it is intended to protect as a prefilter, can be shaped to accommodate exhalation valves or other critical elements of a respirator. The element is retained over the filter area of the respirator in a stretched condition by means of the attachment eyelets 12 which fit over mounting posts on the respirator body. The eyelets typically are reinforced by densifying the filter media in the area immediately around the eyelet by means of heat and pressure. A cross-sectional view of the prefilter element is shown in FIG. 2.

FIG. 3 illustrates installation of the prefilter element shown in FIG. 1 on a respirator which involves a number of complex design elements. The respirator 20 has a substantially spherical shape which would typically require a complex adapter arrangement to seal a non-elastic prefilter element against the respirator. The prefilter element 10 based on the elastomeric filter media of the present invention is readily sealed against this complex structure by means of a four point attachment to the respirator. The attachment eyelets 12 are simply slipped over the attachment posts 22 which cause the prefilter element to be stretched and tightly conform to the contours of the respirator, thereby effecting a seal between the prefilter element and the respirator. (An effective seal is realized when gaps between the filter media and the filtration fixture are reduced to a dimension less than that occurring in the pores of the filter media.) Once loaded, the prefilter element is removed and replaced with a new element, a procedure which is far less expensive than replacing an entire respirator or respirator cartridge.

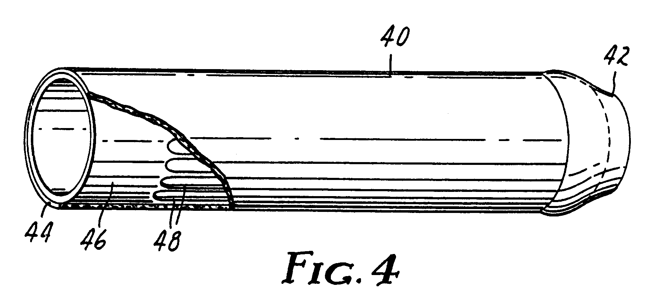

A further useful application for the filter media of the invention is as a tubular elastic filter for a filter tube as shown in FIG. 4. Tubular elastic filter 40 which has a sealed end 42 and an open end 44 is slightly smaller in diameter than filter tube 46 which has openings or perforations 48. The tubular elastic filter is merely stretched over the filter tube and is form-fitted due to its smaller diameter.

This invention is further illustrated by the following examples, but the particular materials and amounts thereof recited in these examples, as well as other conditions and details, should not be construed to unduly limit this invention.

In the examples all parts and percentages are by weight unless otherwise specified. In the examples tests were conducted by placing the filter media over the test holder, stretched to the indicated degree of extension and secured against the cylinder of the test holder in that configuration with two elastic rubber bands (No. 62, available from Universal Corp., Forest Park, IL. The following test methods were used for evaluation purposes in the examples:
Dioctyl Phthalate (DOP) Aerosol Penetration (30 C.F.R. Part 11, Subpart K, NIOSH Regulations): A sample of filter media is mounted on an aluminum cylinder (9.28 cm diameter, 5 cm high) hermetically mounted directly over a 9.28 cm hole in an aluminum sheet. The sample was tested using an Air Techniques, Inc. Model Q127 DOP Penetrometer™ set at a flow rate of 32 liters/minute and generating an aerosol of 0.3 micron DOP particles at a mass concentration of 100 mg/m³. The initial filter weight, area stretch, DOP penetration, pressure drop are reported.
Lead Fume Removal (30 C.F.R. Part 11, Subpart M, NIOSH Regulations): A sample of filter media is mounted on an aluminum cylinder (9.28 cm diameter, 5 cm high) hermetically mounted on a 0.64 cm thick fiber glass/resin board which had a 29/42 standard taper epoxy fitting centrally positioned below the cylinder and hermetically sealed to the Fiberglas/resin board. The sample was exposed to a lead fume challenge of between 15-20 mg/m³ (calculated on the basis of metallic lead content) at a flow rate of 16 liters per minute for a period of 90 minutes. The initial filter weight, area stretch, filter weight gain due to lead removal, lead penetration, initial pressure drop, and final pressure drop are reported.
Silica Dust Removal (30 C.F.R. Part 11, Subpart K, NIOSH Regulations): A sample of filter media is mounted on an aluminum cylinder (9.28 cm diameter, 5 cm high) hermetically mounted on a 0.64 cm thick fiber glass/resin board which had a 29/42 standard taper epoxy fitting centrally positioned below the cylinder and hermetically sealed to the Fiberglas/resin board. The sample was exposed to a silica dust challenge of between 50-60 mg/m³ at a flow rate of 16 liters/minute for a period of 90 minutes. The initial filter weight, area stretch, filter weight gain due to silica dust removal, silica dust penetration, initial pressure drop, and final pressure drop are reported.
Spray Paint Removal (30 C.F.R. Part 11, Subpart L, NIOSH Regulations):
Enamel paint: A sample of filter media is mounted on an aluminum cylinder (9.28 cm diameter, 5 cm high) hermetically mounted on a 0.64 cm thick fiber glass/resin board which had a 29/42 standard taper epoxy fitting centrally positioned below the cylinder and hermetically sealed to the Fiberglas/resin board. The sample was exposed to an enamel paint challenge of 190-250 mg/m³ at a flow of 16 liters/minute for 156 minutes. The area stretch, amount filtered, initial pressure drop, and final pressure drop are reported.
Lacquer-based paint: A sample of filter media is mounted on an aluminum cylinder (9.28 cm diameter, 5 cm high) hermetically mounted on a 0.64 cm thick fiber glass/resin board which had a 29/42 standard taper epoxy fitting centrally positioned below the cylinder and hermetically sealed to the Fiberglas/resin board. The sample was exposed to a lacquer-based paint challenge of 95-125 mg/m³ at a flow of 16 liters/minute for 156 minutes. The area stretch, amount filtered, initial pressure drop, and final pressure drop are reported.

### Examples 1-15

Filter media having multi-directional elastic properties were prepared by melt blowing PS-455-200, a polyesterurethane thermoplastic elastomeric resin available from K.J. Quinn Co., Malden, MA, using a process similar to that described in Wente, Van A., "Superfine Thermoplastic Fibers" in Industrial Engineering Chemistry, Vol. 48, pages 1342 et seq (1965) or in Report No. 4364 of the Naval Research Laboratories, published May 25, 1964 entitled "Manufacture of Superfine Organic Fibers" by Wente, Van A., Boone, C.D., and Fluharty, E.L. except that the melt-blowing die had smooth surfaced circular orifices (10/cm) with a 5:1 length-to-diameter ratio. The die temperature was maintained at 220°C, the primary air temperature and pressure were, respectively, 230°C and 150 kPa, (0.63 cm gap width), and the polymer throughput rate was about 150 gm/hr/cm.

Secondary fibers were loaded into the polyurethane web by dispersing polyester staple fibers (5.5 denier, 3.75 cm in length) in a secondary air stream and impinging that air stream into the primary air stream carrying the polyurethane fiber stream in a process similar to that described in U.S. Patent No. 4,118,531 (Hauser), at a point where the fibers were still in a tacky condition. The secondary air stream intersected the primary air stream in a substantially perpendicular manner. The thus-loaded fiber stream was collected in a random manner on a perforated screen cylinder prior to complete fiber solidification so that the fibers were able to bond to one another and form a coherent web.

The basis weight of the polyurethane web was 100 gm/m² and the polyester staple fiber was added to the polyurethane web at a rate of 40 gm/m² to produce a filter media having a basis weight of about 140 gm/m².

Circular test samples (14.6 cm in diameter) were die cut from both the polyurethane based filter media and the control polypropylene media and marked with three concentric circles having diameters of 7.72, 8.44 and 9.28 cm respectively using a stencil as a guide. The outer circle coincided with the diameter of the test holder and the middle and inner circles corresponded to indicia for 10 and 20 percent diametrical (21 and 44 percent area) extension, respectively, as the filter media was stretched over the filter holder until the circle coincided with the edge of the holder. In stretching the filter media, the basis weight of the filter media decreased to 82.6 percent of the original value, or 115.6 gm/m² with the 10 percent extension and to 69.5 percent of the original value, or 97.3 gm/m² with the 20 percent extension.

The thickness of the filter media was also measured on an unstretched sample and on samples at 10% extension and 20% extension. The samples were mounted as described above except that a solid polished nylon surface was placed beneath the sample and a controlled surface pressure of 0.69 kPa (0.1 psi) was applied to the filter media surface. The thickness was measured using a Mitutoyo No. 192-116 depth gauge and a Starrett No. 711 dial indicator. The initial thickness was 0.23 cm; the thickness at 10% extension (21% area increase) was 0.19 cm; and the thickness at 20% extension (44% area increase) was 0.15 cm.

Samples were tested for DOP aerosol penetration (Examples 1-3), lead fume removal Examples 4-6), silica dust removal (Examples 7-9), and spray paint removal (Enamel - Examples 10-12; Lacquer - Examples 13-15). The results are reported in Tables I, II, III, and IV, respectively.

### Comparative Example 1

A commercially available elastomeric polyurethane web Kanebo™ type ES25, available from Kanebo Company, Japan, having a basis weight of 20 g/m² was tested for spray paint removal. Seven layers of web were used to achieve a basis weight comparable to the the filter media of Example 1. The results are reported in Table IV.

**Table I**

| | Example 1 | Example 2 | Example 3 |
|---|---|---|---|
| Initial filter weight (g): | 2.71 | 2.40 | 2.57 |
| Area stretch (%): | 0 | 21 | 44 |
| DOP penetration (%): | 96 | 96 | 95 |
| Pressure drop (mm H₂O): | 0.6 | 0.4 | 0.45 |

The DOP test data presented in Table I suggests that, for the filter media constructions evaluated, the filtration performance is independent of elongation.

**Table II**

| | Example 4 | Example 5 | Example 6 |
|---|---|---|---|
| Initial filter weight (g): | 2.7244 | 2.7589 | 2.5484 |
| Area stretch (%): | 0 | 21 | 44 |
| Filter weight gain¹ (mg): | 11.3 | 12.6 | 11.9 |
| Lead penetration¹ (mg): | 12.8 | 13.37 | 14.10 |
| Initial pressure drop² (mm H₂O): | 0.80 | 0.76 | 0.62 |
| Final pressure drop² (mm H₂O): | 1.70 | 1.78 | 1.46 |

| | | | |
|---|---|---|---|
| ¹ Determined at a flow rate of 16 lpm | | | |
| ² Determined at a flow rate of 42.5 lpm | | | |

The lead fume removal data presented in Table II shows similar filtration performance for all degrees of elongation of the filter media and also a low pressure drop increase during the test. This data suggests that the filter media constructions tested would have utility as prefilters to remove a portion of lead particulate from air without a significant increase in pressure drop.

**Table III**

| | Example 7 | Example 8 | Example 9 |
|---|---|---|---|
| Initial filter weight (g): | 2.7144 | 2.6378 | 2.6059 |
| Area stretch (%): | 0 | 21 | 44 |
| Filter weight gain¹ (mg): | 50.4 | 50.15 | 51.10 |
| Silica penetration¹ (mg): | 51.82 | 53.68 | 56.12 |
| Initial pressure drop² (mm H₂O): | 1.55 | 1.45 | 1.20 |
| Final pressure drop² (mm H₂O): | 3.15 | 3.10 | 2.85 |

| | | | |
|---|---|---|---|
| ¹ Determined at a flow rate of 16 lpm | | | |
| ² Determined at a flow rate of 42.5 lpm | | | |

The silica dust removal data presented in Table III shows similar performance for all degrees of elongation of the filter media and a low pressure drop increase during the test. This data suggests, as did the lead fume removal data, that the filter media constructions tested would have utility as prefilters to remove a portion of a particulate from air without a significant increase in pressure drop.

**Table IV**

| Enamel test | | | | |
|---|---|---|---|---|
| Example | Area stretch (%) | Amount filtered (%) | Initial pressure drop (mm H₂O) | Final pressure drop (mm H₂O) |
| 10 | 0 | 46 | 0.6 | 0.7 |
| 11 | 21 | 49 | 0.9 | 1.0 |
| 12 | 44 | 51 | 0.8 | 1.0 |
| Comp. 1 | 0 | 29 | 0.3 | 0.5 |

| Lacquer Test | | | | |
|---|---|---|---|---|
| Example | Area stretch (%) | Amount filtered (%) | Initial pressure drop (mm H₂O) | Final pressure drop (mm H₂O) |
| 13 | 0 | 74 | 0.7 | 38 |
| 14 | 21 | 79 | 0.7 | 74 |
| 15 | 44 | 82 | 0.6 | 125 |
| Comp. 2 | 0 | 48 | 0.3 | 9 |

The data in Table IV demonstrates that stretching the filter media of the invention has little effect on filtration efficiency and, in the case of the Enamel Test, very little change in pressure drop occurs with stretching the filter media. The comparative elastic web performs much less efficiently than the filter media of the invention.

### Comparative Example 3

An other comparative web based on polypropylene was prepared in a process similar to that described in Wente, Van A., "Superfine Thermoplastic Fibers" in Industrial Engineering Chemistry, Vol. 48, pages 1342 et seq (1965) or in Report No. 4364 of the Naval Research Laboratories, published May 25, 1964 entitled "Manufacture of Superfine Organic Fibers" by Wente, Van A., Boone, C.D., and Fluharty, E.L.. The polypropylene web had a basis weight of 55 g/m².

All attempts to stretch this web over the test sample holder resulted in a catastrophic failure, i.e., tearing, of the web so no comparative data between filter media of the invention and the control web could be made.

### Examples 16-17

Filter media was prepared as in Examples 1-15 except the polyester fiber was replaced with 50 g/m² of a fibrillated, charged polypropylene film (Filtrete™, available from Filtrete Company) to produce filter media with a basis weight of 150 g/m². The filter media was subjected to a lacquer paint spray test. The results are set forth in Table V.

**Table V**

| Example | Area stretch (%) | Amount filtered (%) | Initial pressure drop (mm H₂O) | Final pressure drop (mm H₂O) |
|---|---|---|---|---|
| 16 | 0 | 99 | 1 | 17 |
| 17 | 21 | 98 | 1 | 58 |

The data in Table V demonstrates that very efficient lacquer paint spray removal can be achieved with filter media of the invention containing charged fibers and that performance remains substantially constant even when the filter media is stretched.

### Examples 18 and 19

In Examples 18 and 19, elastomeric filter media was prepared as in Examples 1-15 except, in Example 18, the amount of polyester staple fiber was increased to 45 g/m² to produce a filter media basis weight of 145 g/m² and, in Example 19, the polyester staple fiber was replaced with 50 g/m² of a fibrillated, charged polypropylene film (Filtrete™, available from Filtrete Company) to produce filter media with a basis weight of 150 g/m². Each filter media was tested for lacquer paint spray removal using 30 C.F.R. 11, Subpart L. The test results are set forth in Table VI.

**Table VI**

| Example | Area stretch (%) | Amount filtered (%) | Initial pressure drop (mm H₂O) | Final pressure drop (mm H₂O) |
|---|---|---|---|---|
| 18 | 0 | 64 | 12 | 57 |
| 19 | 0 | 98 | 12 | 58 |

The data in Table VI demonstrate that improved performance in lacquer paint spray removal can be achieved by substituting charged polypropylene fibers for uncharged polyester fibers.

## Claims

1. Elastomeric nonwoven fibrous fluid filter media for removal of particulate contaminants from the fluid comprising thermoplastic elastomeric melt-blown small diameter fibers, having diameters of from 1 »m to 50 »m, the small diameter fibers being randomly arrayed, the filter media having a basis weight in the range of from 15 to 300 gm/m², substantially uniform stretch properties in all directions and whose filtration properties are independent of filter media elongations sufficient to increase the filter media surface area at least 10 percent.

2. The filter media of claim 1 wherein said thermoplastic elastomeric melt blown small diameter fibers comprise elastomeric polyurethanes, elastomeric polyesters, elastomeric polyamides and elastomeric A-B-A' block copolymers wherein A and A' are styrenic moieties and B is an elastomeric midblock.

3. The filter media of any preceding claim wherein the small diameter fibers have diameters of from 5 »m to 30 »m.

4. The filter media of any preceding claim wherein the filter media has a basis weight in the range of from 100 to 200 gm/m².

5. The filter media of any preceding claim wherein the filter media has a tensile strength of at least 0.5 g/2.5 cm width/g/m² basis weight.

6. The filter media of any one of preceding claims 1-5 wherein the filter media has a tensile strength of at least 2 g/2.5 cm width/g/m² basis weight.

7. The filter media of any preceding claim wherein the filter media has an elongation at break of at least 50%.

8. The filter media of any one of preceding claims 1-6 wherein the filter media has an elongation of at least 100%.

9. The filter media of any preceding claim wherein the filter media further comprises crimped spacing staple fibers.

10. The filter media of claim 9 wherein the crimped spacing staple fibers comprise acrylic, polyester, nylon or polyolefin fibers.

11. The filter media of any one of preceding claims 9-10 wherein the crimped spacing fibers comprise from 10 to 60 weight percent of the filter media.

12. The filter media of any one of preceding claims 9-11 wherein the crimped spacing fibers are 1.5 to 15 denier in size.

13. The filter media of any one of preceding claims 9-12 wherein the crimped spacing fibers have an average staple length sufficient to include at least one complete crimp.

14. The filter media of any one of preceding claims 9-13 wherein the crimped spacing fibers have at least three or four crimps.

15. The filter media of any one of preceding claims 9-14 wherein the crimped spacing fibers average 2 to 15 centimeters in length.

16. The filter media of any preceding claim wherein the filter media further comprises charged fibers.

17. The filter media of claim 16 wherein the charged fibers comprise 10 to 60 weight percent of the filter media.

18. A respirator having as a low pressure drop prefilter thereon for removal of particulate fluid contaminants the elastomeric nonwoven fibrous fluid filter media of any preceding claim.

## Patentansprüche

1. Elastomeres, nichtgewebtes faseriges Fluidfiltermittel zur Entfernung von partikulären Kontaminanten aus dem Fluid, umfassend thermoplastische, elastomere, aus der Schmelze geblasene Fasern mit kleinem Durchmesser, deren Durchmesser von 1 Mikrometer bis 50 Mikrometer beträgt, wobei die Fasern mit kleinem Durchmesser wahllos angeordnet sind, das Filtermittel ein Flächengewicht im Bereich von 15 ... 300 g/m² aufweist, mit im wesentlichen in allen Richtungen gleichförmigen Streckeigenschaften, und dessen Filtriereigenschaften unabhängig sind von Filtermitteldehnungen, ausreichend, um die Filtermitteloberfläche um mindestens 10 Prozent zu vergrößern.

2. Filtermittel nach Anspruch 1, bei welchem die thermoplastischen, elastomeren, aus der Schmelze geblasenen Fasern mit kleinen Durchmessern elastomere Polyurethane, elastomere Polyester, elastomere Polyamide und elastomere A-B-A'-Block-Copolymere umfassen, bei denen A und A' Styrolgruppen sind und B ein elastomerer Mittelblock ist.

3. Filtermittel nach einem der vorgenannten Ansprüche, bei welchem die Fasern mit kleinem Durchmesser Durchmesser von 5 Mikrometer bis 30 Mikrometer aufweisen.

4. Filtermittel nach einem der vorgenannten Ansprüche, bei welchem das Filtermittel ein Flächengewicht im Bereich von 100 ... 200 g/m² aufweist.

5. Filtermittel nach einem der vorgenannten Ansprüche, bei welchem das Filtermittel eine Zugfestigkeit von mindestens 0,5 g/2,5 cm Breite / g/m² Flächengewicht aufweist.

6. Filtermittel nach einem der Ansprüche 1 bis 5, bei welchem das Filtermittel eine Zugfestigkeit von mindestens 2 g/2,5 cm Breite / g/m² Flächengewicht aufweist.

7. Filtermittel nach einem der vorgenannten Ansprüche, bei welchem das Filtermittel eine Bruchdehnung von mindestens 50 % hat.

8. Filtermittel nach einem Ansprüche 1 bis 6, bei welchem das Filtermittel eine Bruchdehnung von mindestens 100 % hat.

9. Filtermittel nach einem der vorgenannten Ansprüche, bei welchem das Filtermittel ferner beabstandende Kräuselstapelfasern aufweist.

10. Filtermittel nach Anspruch 9, bei welchem die beabstandenden Kräuselstapelfasern Fasern aus Polyacryl, Polyester, Nylon oder Polyolefin umfassen.

11. Filtermittel nach einem der Ansprüche 9 bis 10, bei welchem die beabstandenden Kräuselfasern 10 % bis 60 Gewichtsprozent des Filtermittels umfassen.

12. Filtermittel nach einem der Ansprüche 9 bis 11, bei welchem die beabstandenden Kräuselfasern eine Größe von 1,5 bis 15 Denier haben.

13. Filtermittel nach einem der Ansprüche 9 bis 12, bei welchem die beabstandenden Kräuselfasern eine mittlere Stapellänge aufweisen, die zum Einbeziehen von mindestens einer vollständigen Kräuselung ausreichend ist.

14. Filtermittel nach einem der Ansprüche 9 bis 13, bei welchem die beabstandenden Kräuselstapelfasern mindestens drei oder vier Kräuselungen aufweisen.

15. Filtermittel nach einem der Ansprüche 9 bis 14, bei welchem die beabstandenden Kräuselfasern eine mittlere Länge von 2 bis 15 cm haben.

16. Filtermittel nach einem der vorgenannten Ansprüche, bei welchem das Filtermittel ferner geladene Fasern aufweist.

17. Filtermittel nach Anspruch 16, bei welchem die geladenen Fasern 10 % bis 60 Gewichtsprozent des Filtermittels umfassen.

18. Atemschutzmaske, die das elastomere, nichtgewebte faserige Fluidfiltermittel nach einem der vorgenannten Ansprüche als ein darauf befindliches Vorfilter mit geringem Druckabfall zur Entfernung von partikulären Fluidkontaminanten aufweist.

## Revendications

1. Matériau de filtration au fluide, fibreux, non tissé et élastomère, destiné à extraire des produits polluants en particules à partir du fluide, comprenant des fibres de petit diamètre, élastomères et thermoplastiques, obtenues par soufflage à l'état fondu et ayant des diamètres compris entre 1 »m et 50 »m, les fibres de petit diamètre étant disposées suivant un agencement aléatoire, tandis que le matériau de filtration a un poids par unité de surface compris entre 15 et 300 g/m² qui possède des propriétés d'étirement pratiquement uniformes dans toutes les directions et que les propriétés de filtration sont indépendantes d'augmentations de dimensions du matériau de filtration qui sont suffisantes pour accroître l'aire superficielle du matériau de filtration d'au moins 10 %.

2. Màtériau de filtration suivant la revendication 1, dans lequel les fibres de petit diamètre, élastomères et thermoplastiques, obtenues par soufflage à l'état fondu, comprennent des polyuréthannes élastomères, polyesters élastomères, polyamides élastomères et copolymères séquencés A-B-A' dans lesquels A et A' sont des groupements styréniques et B est un bloc intermédiaire élastomère.

3. Matériau de filtration suivant l'une quelconque des revendications précédentes, dans lequel les fibres de petite diamètre ont des diamètres compris entre 5 »m et 30 »m.

4. Matériau de filtration suivant l'une quelconque des revendications précédentes, dans lequel le matériau de filtration a un poids par unité de surface compris entre 100 et 200 g/m².

5. Matériau de filtration suivant l'une quelconque des revendications précédentes, dans lequel le matériau de filtration a une résistance à la traction au moins égale à 0,5 g/2,5 cm de largeur/g/m² de poids par unité de surface.

6. Matériau de filtration suivant l'une quelconque des revendications précédentes 1 à 5, dans lequel le matériau de filtration a une résistance à la traction égale au moins à 2 g/2,5 cm de largeur/g/m² de poids par unité de surface.

7. Matériau de filtration suivant l'une quelconque des revendications précédentes, dans lequel le matériau de filtration possède un allongement à la rupture au moins égal à 50 %.

8. Matériau de filtration suivant l'une quelconque des revendications précédentes 1 à 6, dans lequel le matériau de filtration possède un allongement au moins égal à 100%.

9. Matériau de filtration suivant l'une quelconque des revendications précédentes, dans lequel le matériau de filtration comprend en outre des fibres coupées d'espacement ayant une forme ondulée.

10. Matériau de filtration suivant la revendication 9, dans lequel les fibres coupées d'espacement ayant une forme ondulée comprennent des fibres acryliques, de polyester, de nylon ou de polyoléfine.

11. Matériau de filtration suivant l'une quelconque des revendications précédentes 9 à 10, dans lequel les fibres d'espacement ayant une forme ondulée constituent de 10 à 60 % en poids du matériau de filtration.

12. Matériau de filtration suivant l'une quelconque des revendications précédentes 9 à 11, dans lequel les fibres d'espacement ayant une forme ondulée ont un titre compris entre 1,5 et 15 deniers.

13. Matériau de filtration suivant l'une quelconque des revendications précédentes 9 à 12, dans lequel les fibres d'espacement ayant une forme ondulée ont une longueur moyenne de fibres coupées qui est suffisante pour comporter au moins une ondulation complète.

14. Màtériau de filtration suivant l'une quelconque des revendications précédentes 9 à 13, dans lequel les fibres d'espacement ayant une forme ondulée comportent au moins trois ou quatre ondulations.

15. Matériau de filtration suivant l'une quelconque des revendications précédentes 9 à 14, dans lequel les fibres d'espacement ayant une forme ondulée ont une longueur moyenne comprise entre 2 et 15 centimètres.

16. Matériau de filtration suivant l'une quelconque des revendications précédentes, dans lequel le matériau de filtration comprend en outre des fibres chargées.

17. Matériau de filtration suivant la revendication 16, dans lequel les fibres chargées constituent de 10 à 60 % en poids du matériau de filtration.

18. Respirateur comportant, disposé sur lui en tant que filtre de préfiltration à faible perte de charge, en vue d'extraire les produits polluants d'un fluide en particules, un matériau de filtration pour fluide, fibreux, non tissé et élastomère, suivant l'une quelconque des revendications précédentes.
